# EUROPEAN PATENT APPLICATION

(11) **EP 3 016 008 A1**
(43) Date of publication of application: **04.05.2016**
(21) Application number: 14190686.7
(22) Date of filing: 28.10.2014
(51) Int. Cl.: G06F 17/50

(54) **Method for structural circuit analysis**

(71) Applicant: Synopsys, Inc., Mountain View, CA 94043 (US)
(72) Inventor: Kowalewski, Marcin, 81-574 Gdynia (PL)
(74) Representative: Epping - Hermann - Fischer

(57) **Abstract**

A method for structural analysis of a circuit description representing an electronic circuit being performed by means of a circuit design tool. A base node conductively coupled to a first supply node connected to a first supply terminal is selected. It is determined whether the base node is directly connected to a second supply node. The second supply node is connected to a second supply terminal. If so, a conductive path between the first supply node and the second supply node is diagnosed. Otherwise, a component of the circuit is selected. The component has a first terminal connected to the base node and a second terminal connected to a test node. An operating point of the component is compared with a conduction criterion for the first and the second terminal. Depending on the result, a conductive path between the first supply node and the test node is diagnosed.

## Description

The invention relates to a method for structural circuit analysis, in particular with respect to an analysis of leakage paths in an electronic circuit. The method is particularly suitable for analyzing integrated circuits, ICs, for example complementary metal-oxide-semiconductor, CMOS, circuits.

When simulating electronic circuits, in particular ICs containing big analog blocks and digital cells, the circuit may be configured in an operating mode, for example a power down mode, and leakage simulations may be run using a dedicated test bench or simulator. The simulations may be run assuming typical conditions with respect to process, voltage and temperature, PVT. Then, leakage numbers indicating estimated values of leakage current in the circuit may be reviewed. This is commonly performed manually. Then, the simulations may be run in PVT process corners. For the process corners, conditions corresponding to extreme cases of possible ranges with respect to PVT are assumed.

An accuracy of such a simulation may strongly depend on the structure of the test bench or simulator. In such an approach convergence tolerances are provided to the simulator. These tolerances are often not particularly precise to be able to treat large scale circuits. Consequently, the resulting leakage numbers may have limited significance, in particular since the leakage numbers may be in the order of µA or nA. Furthermore, the manual review of the leakage numbers may be very time consuming if the analyzed circuit contains many components, for example in the order of more than hundred thousand.

Moreover, practice shows that many uncontrolled leakage paths may be hidden in leakage numbers for corner cases. Especially for fast-fast process corners, leakage numbers may increase significantly.

A common approach is to perform the leakage analysis manually on smaller sub-blocks of the circuit assuming certain block control settings. On a higher level the assumed control settings may be wrong, leading to unexpected leakage paths.

Often, leakage results not only from drain-source leakage or the like but also from uncontrolled leakage paths. Uncontrolled leakage paths may appear for example when transistor parameters like gate-source voltage or gate-drain voltage are not controlled properly by the circuit.

Therefore it is an objective to provide an improved concept for automatized circuit analysis allowing leakage of an integrated circuit to be determined more accurately and to be managed in a controlled way.

This objective is achieved by the subject matter of the independent claims. Further implementations are the subject-matter of the dependent claims.

According to the improved concept, a circuit node is selected as a base node. The base node is conductively connected to a supply node of the circuit. It is then checked whether the base node is connected to another supply node of the circuit, which would result in a leakage path. If this is not the case, a component connected to the base node is analyzed with respect to its conduction between a terminal connected to the base node and a terminal connected to a test node. Based thereupon, the conductive path may be diagnosed to extend from the supply node at least to the test node.

According to the improved concept a method for structural analysis of a circuit description, the circuit description representing an electronic circuit, is provided. The circuit description may for example represent an electronic circuit that may be implemented as an integrated circuit. The method is performed by means of a circuit design tool, for example an Electronic Design Automation, EDA, tool.

The method comprises selecting a base node of the electronic circuit, the base node being coupled via a conductive path to a first supply node of the circuit. The first supply node is connected to a first supply terminal.

The method further comprises determining whether the base node is directly connected to a second supply node of the circuit. The second supply node is connected to a second supply terminal.

If the base node is directly connected to the second supply node, the method further comprises diagnosing a conductive path between the first supply node and the second supply node. Such conductive path between the first supply node and the second supply node may for example be considered as a leakage path.

If the base node is not directly connected to the second supply node, a component of the circuit is selected. Therein, the component is not contained by the conductive path coupling the base node to the first supply node. The component has a first terminal being connected to the base node and a second terminal being connected to a test node of the circuit.

Then, an operating point of the component is compared with at least one specified conduction criterion for the first and the second terminal. Depending on the result of the comparison, a conductive path between the first supply node and the test node is diagnosed. In particular, the conductive path between the first supply node and the test node may be diagnosed if the result of the comparison suggests that the component is in a conducting state with respect to the first terminal and the second terminal. The conductive path between the first supply node and the test node may be considered as being a combination of the conductive path between the first supply node and the base node and a conductive path between the base node and the test node.

If, on the other hand, the result of the comparison suggests that the component is in a non-conducting state with respect to the first terminal and the second terminal, the conductive path between the first supply node and the test node may be not be diagnosed. In particular, in such a case, one potential leakage path between the first supply node and the second supply node may be excluded. Other leakage paths may exist, depending on the structure of the circuit.

The operating point of the component may for example comprise electrical potentials at terminals of the component, for example but not limited to the first and the second terminal of the component, and/or voltages between the terminals of the component or between terminals of the component and reference terminals. The reference terminals may for example comprise the first supply terminal and/or the second supply terminal.

The first supply node and the first supply terminal may for example be a ground node and a ground terminal, respectively. Alternatively, the first supply node and the first supply terminal may for example be a power node and a power terminal, respectively. For example, if the first supply node and the first supply terminal are a ground node and ground terminal, respectively, the second supply node and the second supply terminal may for example be a power node and a power terminal, respectively. For example, if the first supply node and the first supply terminal are a power node and power terminal, respectively, the second supply node and the second supply terminal may for example be a ground node and a ground terminal, respectively.

The base node being coupled via a conductive path to the first supply node refers to the base node being either directly connected to the first supply node or connected to the first supply node via a circuit path containing only such components that are in a conducting state or are considered to be in a conducting state.

In some implementations, the method further comprises generating an analysis report containing information about a result of the comparison of the operating point and the at least one conduction criterion.

According to some implementations of the method, a further component of the circuit is selected depending on the result of the comparison of the operating point with the at least one conduction criterion. The further component is thereby connected to the component. Then, a further operating point of the further component is determined. Furthermore, it is determined whether the further operating point and/or the connection of the further component to the component affect the result of the comparison. In such implementations, the diagnosis of the conductive path between the first supply node in the test node depends on a result of the determination whether the further operating point and/or the connection of the further component to the component affects the result of the comparison.

By means of such implementations it is for example possible to determine whether a potential leakage path is managed by the design of the circuit. This means, according to the method it may be checked whether the result of the comparison is ensured by the further component. This may for example avoid that an "accidentally" non-conducting component is considered generally non-conducting. In this way a conductive path between the supply node and the test node may be diagnosed even if the comparison of the operating point with the at least one specified conduction criterion suggests that the component may be considered non-conducting.

In several such implementations, the selection of the further component, the determination of the further operating point and the determination whether the further operating point and/or the connection of the further component affects the result of the comparison are carried out if the comparison yields that the operating point renders the component non-conducting.

According to some implementations of the method, an analysis report is generated. The analysis report contains information about a result of the comparison of the operating point and the at least one conduction criterion and, depending on the result of the comparison, whether the further operating point and/or the connection of the further component to the component affects the result of the comparison.

In further implementations of the method, at least the steps of selecting the base node, determining whether the base node is directly connected to the second supply node, selecting the component, comparing the operating point of the component with at least one specified conduction criterion and diagnosing a conductive path are carried out repeatedly in the cyclic manner.

Therein, the diagnosis of a conductive path comprises both possibilities, the diagnosis of the conductive path between the first supply node and the second supply node if the base node is directly connected to the second supply node and the diagnosis of the conductive path between the first supply node and the test node depending on the result of the comparison.

By performing said steps in a cyclic manner, the method enables to begin with a certain circuit node as a base node and analyze the path between the first supply node and the base node as well as components connected to the base node, in particular all components connected to the base node, in the way described herein for the various implementations of the method. In particular, the method may start with the first supply node as the base node, check all components connected to the base node and, for example if a conductive path between the first supply node and a respective test node is diagnosed, proceed with the respective test node as a new base node in a following cycle. In this way all potential conductive paths between the first supply node and the second supply node may be checked. Therein, a given potential conductive path is for example checked only once. That is, by means of the method checks regarding paths and/or components of the circuit that have already been checked at an earlier time are preferably not repeated. However, the method may be repeated for all potential conductive paths for different PVT conditions.

The method may for example stop when all potential conductive paths between the first supply node and the second supply node, that is all potential leakage paths may be excluded or have a low probability. This may for example be the case, if no base node being conductively connected to the first supply node may be selected anymore that has not been selected as base node in a previous cycle and none of the base nodes of previous cycles was connected conductively to the respective test node.

In particular, the various implementations of the method may be performed for defined sub-blocks of the circuit, for example for individual power domains of the circuit. The circuit may for example comprise several independent or effectively independent pairs of supply terminals. A power domain may for example be understood as a part of the circuit with only one corresponding pair of supply terminals. The method may for example be performed repeatedly in a cyclic manner for a sub-block until all possible leakage paths are diagnosed or excluded.

In some implementations of the method, the selection of the base node comprises selecting the first supply node as the base node in an initial cycle.

In some implementations of the method, in a cycle the selection of the base node comprises selecting the test node of the preceding cycle as the base node.

In some implementations of the method, in a cycle the selection of the base node comprises selecting the base node of a preceding cycle as the base node.

According to several implementations of the method, the comparison of the operating point with at least one conduction criterion comprises comparing a voltage between two terminals of the component with a threshold value. Therein, the two terminals of the component may for example be the first terminal and the second terminal. The two terminals may also contain further terminals of the component.

For example, if the component is a metal-oxide-semiconductor, MOS, transistor, the base node and the test node may be connected to a source and a drain terminal of the transistor, respectively. Then, a voltage between the source terminal and the drain terminal may be compared with a conduction criterion. Alternatively or in addition, a voltage between the source or the drain terminal and a gate terminal of the transistor may be compared with a conduction criterion.

In some implementations of the method, the threshold value depends on the type of the component and/or on the positioning of the component within the circuit.

For example, different threshold values may be used for transistors, resistors, diodes, capacitors and other components contained in the circuit. Also for a given type of component different threshold values may be used, for example depending on the location of the component in the circuit.

Also for a given component different threshold values may be used. For example a conduction threshold value may be used to determine whether the component is in a conducting state or may be considered conductive. For example a non-conduction threshold value may be used to determine whether the component is in a non-conducting state or may be considered non-conducting. In the course of the comparing of the operating point of the component, a voltage between two terminals of the component may be compared to the conduction threshold value and consequently the component may be considered conducting if the voltage is for example larger than the conduction threshold value. Alternatively or in addition, the voltage may be compared to the non-conduction threshold value and consequently the component may be considered non-conducting if the voltage is for example smaller than the non-conduction threshold value. Therein, the conduction threshold value may or may not be equal to the non-conduction threshold value.

In several implementations of the method, a netlist, a configuration file and/or a simulator file are provided beforehand.

Based on the netlist, the base node, the test node and/or the component may be selected. The netlist may for example be a Simulation Program with Integrated Circuit Emphasis, SPICE, netlist generated by means of a SPICE-software program. Alternatively the netlist may be generated by means of another software program. The netlist may for example contain information about components, terminals, nodes and other features of the circuit. This information may for example comprise specifications, parameters and/or types of the components. The information may also comprise positions and/or structural arrangements of the components, terminals and nodes. The netlist may for example contain this information based on or partially based on an equivalent circuit of the circuit.

Based on the configuration file, for example the operating point may be compared with the at least one conduction criterion. The configuration file may for example contain the at least one conduction criterion. The configuration file may for example further comprise information about the technology of the components of the circuit, for example whether the components are implemented according to a MOS technology, a bipolar technology or another technology.

From the simulator file for example the operating point and, if applicable the further operating point, may be obtained. The simulator file may be generated by means of a simulation program, for example a simulation program for analyzing leakage values within the circuit.

According to further implementations, the method further comprises recognizing analog circuitry structures of the electronic circuit based on the netlist and/or the configuration file. This may for example be performed before the various steps of the method described before are carried out.

In the course of the recognition, for example logic cells, level shifters, current mirrors, differential pairs, electrostatic discharge protection units and so forth may be recognized. By means of the recognition, the various steps of the method described before, in particular the selection of the base node in a cycle of the method, may be optimized.

In several implementations of the method, the circuit design tool is implemented as an Electronic Design Automation tool.

Several further implementations of the method may be readily obtained by combining or splitting implementations described herein.

According to the improved concept also a computer program product may be provided. The computer program product comprises a code, said code being configured to implement a method according to one of the described implementations the method.

Therein, the computer program product is stored for example on a storage device to be used with a computer. The computer program product may be carried out by the computer, for example within a circuit design tool, for example an EDA tool.

In the following the invention is explained in detail with the aid of exemplary implementations by reference to the drawings. Components that are functionally identical or have an identical effect may be denoted by identical references. Identical components and/or components with identical effects may be described only with respect to the figure where they first occur; their description is not necessarily repeated in subsequent figures.

In the drawings
- Figure 1: shows a simplified representation of an illustrative integrated circuit design flow;
- Figure 2: shows an exemplary implementation of a method according to the improved concept;
- Figure 3: shows a further exemplary implementation of a method according to the improved concept; and
- Figures 4A and 4B: show parts of an exemplary electric circuit that may be analyzed by means of an implementation of a method according to the improved concept.

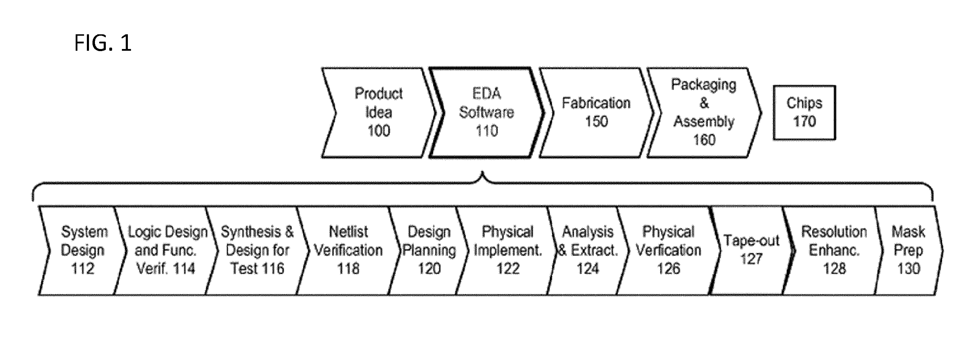

Figure 1 shows a simplified representation of an illustrative design flow for designing an electronic circuit in particular an integrated circuit, IC. An implementation of a method according to the improved concept may for example be embedded within such design flow. However, an implementation of a method according to the improved concept may also be utilized within another design flow or independently from a design flow.

At a high level, the process starts with the product idea (step 100) and is realized in an Electronic Design Automation, EDA, software design process (step 110). When the design is finalized, it can be taped-out (step 127). At some point after tape-out, the fabrication process (step 150) and packaging and assembly processes (step 160) occur, resulting ultimately in finished IC chips (result 170).

The EDA software design process (step 110) itself is composed of a number of steps 112-130, shown in linear fashion for simplicity. In an actual integrated circuit design process, the particular design might have to go back through steps until certain tests are passed. Similarly, in any actual design process, these steps may occur in different orders and combinations. This description is therefore provided by way of context and general explanation rather than as a specific, or recommended, design flow for a particular integrated circuit.

A brief description of the component steps of the EDA software design process (step 110) is provided.

System design (step 112): Designers describe functionalities they want to implement. They may perform what-if planning to refine functionality, check costs, etc. Hardware-software architecture partitioning may be carried out at this stage. Example EDA software products from Synopsys, Inc. that can be used at this step include Model Architect, Saber, System Studio, and DesignWare(R) products.

Logic design and functional verification (step 114): At this stage, a VHDL or Verilog code for modules in the system is written and the design is checked for functional accuracy. More specifically, the design is checked to ensure that it produces correct outputs in response to particular input stimuli. Example EDA software products from Synopsys, Inc. that can be used at this step include VCS, VERA, DesignWare(R), Magellan, Formality, ESP and LEDA products.

Synthesis and design for test (step 116): Here, the VHDL/Verilog is translated to a netlist. The netlist can be optimized for the target technology. Additionally, the design and implementation of tests to permit checking of the finished chip occurs. Example EDA software products from Synopsys, Inc. that can be used at this step include Design Compiler(R), Physical Compiler, DFT Compiler, Power Compiler, FPGA Compiler, TetraMAX, and DesignWare(R) products.

Netlist verification (step 118): At this step, the netlist is checked for compliance with timing constraints and for correspondence with the VHDL/Verilog source code. Example EDA software products from Synopsys, Inc. that can be used at this step include Formality, PrimeTime, and VCS products. Aspects of the invention may be performed during this step 118.

Design planning (step 120): Here, an overall floorplan for the chip is constructed and analyzed for timing and top-level routing. Example EDA software products from Synopsys, Inc. that can be used at this step include Astro and Custom Designer products.

Physical implementation (step 122): The placement (positioning of circuit elements) and routing (connection of the same) is carried out in this step (place-and-route process). Example EDA software products from Synopsys, Inc. that can be used at this step include the Astro, IC Compiler, and Custom Designer products.

Analysis and extraction (step 124): In this step, the circuit function is verified at a transistor level, in turn permitting what-if refinement. Example EDA software products from Synopsys, Inc. that can be used at this step include AstroRail, PrimeRail, PrimeTime, and Star-RCXT products.

Physical verification (step 126): At this step various checking functions are performed to ensure correctness for: manufacturing, electrical issues, lithographic issues, and circuitry. Example EDA software products from Synopsys, Inc. that can be used at this step include the Hercules product.

Tape-out (step 127): This step provides the "tape-out" data to be used (after lithographic enhancements are applied if appropriate) for production of masks for lithographic use to produce finished chips. Example EDA software products from Synopsys, Inc. that can be used at this step include the IC Compiler and Custom Designer families of products.

Resolution enhancement (step 128): This step involves geometric manipulations of the layout to improve manufacturability of the design. This step for example includes optical proximity correction, OPC. Example EDA software products from Synopsys, Inc. that can be used at this step include Proteus, ProteusAF, and PSMGen products.

Mask data preparation (step 130): This step provides mask-making-ready "tape-out" data for production of masks for lithographic use to produce finished chips. Example EDA software products from Synopsys, Inc. that can be used at this step include the CATS(R) family of products. Often this step includes partitioning or fracturing non-rectangular shaped islands into rectangles.

As mentioned, aspects of the invention may be performed during netlist verification (step 118). However, it may also be suitable to perform aspects of the invention during other steps of the EDA process or during steps of another circuit design process.

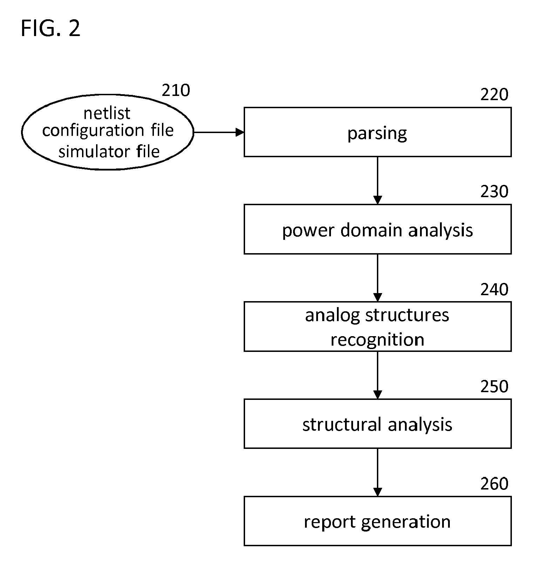

Figure 2 shows an exemplary implementation of a method according to the improved concept.

In block 210 a netlist, a configuration file and a simulator file may be provided. In block 120 the configuration file and the netlist may be parsed.

In block 230 a power domain analysis of an electronic circuit to be analyzed may be performed. The circuit may for example comprise several independent or effectively independent pairs of supply terminals. A power domain may for example be understood as a part of the circuit with only one correspond-ding pair of supply terminals.

In block 240 analog and/or digital circuitry structures of the circuit may be recognized for example based on the netlist and/or the configuration file. Thereby, for example logic cells, level shifters, current mirrors, differential pairs, electrostatic discharge protection units and/or other analog structures of circuit may be recognized. Some leakage paths may be identified already in this step of the method.

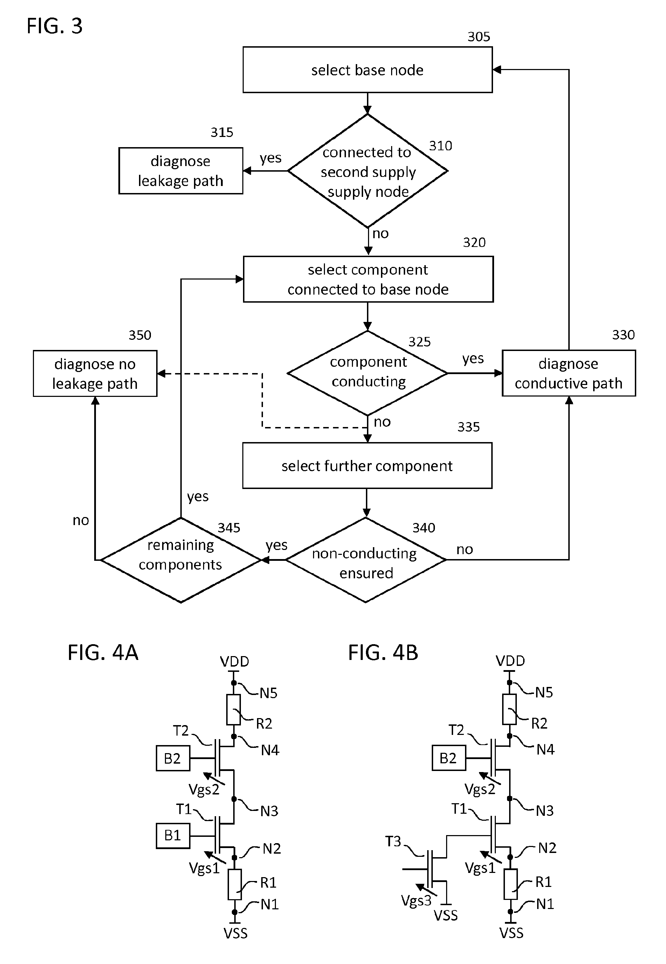

In block 250 a structural analysis of the circuit or of one or more power domains of the circuit may be performed by means of an implementation of the method according to the improved concept. In this step, leakage paths in the circuit may be identified. In particular such leakage paths may be identified that are not or may not be identified in block 240. For a detailed description of the structural analysis it is referred to the descriptions and explanations with respect to figures 3, 4A and 4B.

In block 260 a report may be generated containing for example results and/or diagnoses of the structural analysis performed in block 250.

Figure 3 shows a further exemplary implementation of a method according to the improved concept.

The method begins in block 305 by selecting a circuit node of the circuit as a base node. In case the step corresponding to block 305 is carried out initially, the base node may for example correspond to a first supply node, for example a ground node of the circuit, in particular of a power domain of the circuit. Otherwise, the base node is coupled to the first supply node via a conductive path. That is, the base node is connected to the first supply node via one or more components of the circuit that are in a conducting state or are considered to be in a conducting state. The selection of the base node may be performed based on the netlist being for example provided beforehand. The netlist may for example be generated by a simulation software program, for example a SPICE software program.

In block 310 it is checked, for example by means of the netlist, whether the base node selected in block 305 is connected to a second supply node of the circuit. The second supply node may for example correspond to a power node of the circuit, in particular of the power domain. If it is found that the base node is connected to the second supply node, a conductive path between the first and the second supply node, that is a leakage path, is diagnosed in block 315. In this case for example the ground node is effectively conductively coupled to for example the power node.

Then, the method may start over again with block 305 if, in addition to the diagnosed leakage path, further leakage paths may exist in the circuit or in the power domain. The method may also start over again with block 305, if no further leakage path may exist in the power domain but a further leakage path may exist in another power domain. The information necessary for these decisions may be provided for example via the netlist.

If in block 310, it is found that the base node is not connected to the second supply node, a component of the circuit, for example a transistor, a resistor, a diode or another component, with a first terminal connected to the base node is selected in block 320. This may again be performed based on the netlist. The component has also a second terminal connected to a test node of the circuit. Therein, the component is not part of the conductive path coupling the base node to the first supply node.

Then, in block 325, it is checked whether the component is in a conducting state or can be considered being in a conducting state or whether the component is in a non-conducting state. The conducting state and the non-conducting state are to be understood with respect to a conduction between the first and the second terminal. This is performed by means of comparing an operating point of the component with at least one conduction criterion. The operating point of the component may for example consist of values of electrical potentials at terminals, including but not limited to the first and the second terminal, of the component or of the circuit. In other words, the operating point may for example consist of voltages between the terminals of the component or between the terminals of the component and other terminals within the circuit. The operating point of the component may for example be provided via the simulator file.

If the component is, for example, a MOS transistor, the first terminal may for example be a source terminal of the transistor and the second terminal may for example be a drain terminal of the transistor or vice versa. The comparing of the operating point with the conduction criterion may for example comprise comparing a gate-source voltage of the component with a first and/or a second gate-source threshold value, comparing a gate-drain voltage of the component with a first and/or a second gate-drain threshold value and/or comparing a source-drain voltage of the component with a first and/or a second source-drain threshold value.

The component may then for example be considered being in a conducting state if the gate-source voltage is larger than the first gate-source threshold value, the gate-drain voltage is larger than the first gate-drain threshold value and/or the source-drain voltage is smaller than the first source-drain threshold value.

On the other hand, the component may for example be considered being in a non-conducting state if the gate-source voltage is smaller than the second gate-source threshold value, the gate-drain voltage is smaller than the second gate-drain threshold value and/or the source-drain voltage is larger than the second source-drain threshold value. Therein, the first threshold values may or may not be equal to the second threshold values. The threshold values may for example be comprised by the configuration file. Typical values for the threshold values may for example lie in the order of mV, for example around 5mV.

Depending on the components and/or the definition of the threshold values the conclusion that the component is or is considered to be in a conducting or a non-conducting state may depend differently on the comparisons than explained above.

If the component is, for example, a resistor, the comparing of the operating point with the conduction criterion may for example comprise comparing a voltage drop over the resistor with a first and/or a second resistor threshold value. The component may then for example be considered being in a conducting state if the voltage drop is smaller than the first resistor threshold value and may for example be considered being in the non-conducting state if the voltage drop is larger than the second resistor threshold value. Therein, the first resistor threshold value may or may not be equal to the second resistor threshold value. The threshold values may for example be comprised by the configuration file.

It is pointed out that for some circuit structures a non-conducting state according to the explanations above may not be possible of favorable. In such cases, a leakage path may for example be identified during block 240 of Figure 2 where circuit structures are recognized, as mentioned above.

If it is found in block 325 that the component is in a conducting state or is considered being in a conducting state, the method proceeds with diagnosing a conductive path between the first supply node and the test node in block 330. As described, a conductive path between the first supply node and the base node was already assumed. Since the component is found to be or considered being in a conducting state, the diagnosed conductive path may in a sense be "extended" by the path between the base node and the test node resulting in the conductive path between the first supply node and the test node.

Then, the method starts over with block 305 selecting another base node. The base node may now for example correspond the previous test node. Alternatively, the base node may remain the same. When again a component is selected in block 220, the component may be the same component as before, in particular when the base node remains unchanged. Alternatively, the component may be a different component as before. When the component is the same as before, the second terminal may now be a different terminal of the component as before.

If it is found in block 325 that the component is in a non-conducting state or is considered being in a non-conducting state, a further component connected to the component is selected in block 335. This is carried out for example by means of the netlist. A further operating point of the further component is determined for example by means of the simulator file.

It is then determined in block 340 whether the further component affects the operating point of the component such that the non-conducting state is ensured. In particular, it is determined whether the further operating point and/or the connection of the further component to the component affect the result of the comparison of the operating point of the component with the at least one conduction criterion. To this end, details of the connection of the further component to the component may be obtained for example from the netlist.

If it is found in block 340 that the non-conducting state of the component is not ensured by the further component, the component is considered being in the non-conducting state, in spite of the result from block 325, and the method proceeds as described with block 330.

If it is found in block 340 that the non-conducting state of the component is ensured by the further component, the component is considered being in the conducting state, in agreement with the result of block 325.

It is then checked in block 345 whether there is a remaining component being connected to the base node that has not been analyzed regarding conductivity with respect to the base node before. If no such remaining component is present, it is proceeded with block 350, diagnosing no leakage path. Then the method may start over with block 305.

If, on the other hand, a remaining component is present it is proceeded with block 320, wherein now the component is replaced by the remaining component.

In an alternative implementations of the method, the blocks 335, 340 and 345 are not carried out. In such implementations it is proceeded directly with block 350 if in block 325 it is found that the component is in or is considered being in the non-conducting state.

The described method and also alternative implementations of the method may for example be run repeatedly e.g. for different PVT conditions. Particularly suitable may be typical PVT conditions as well as PVT corner cases. The PVT corner cases correspond to conditions with extremal or nearly extremal values of possible parameter ranges with respect to PVT. From the results of the runs corresponding to different PVT conditions, additional information about possible uncontrolled leakage paths in the circuit may be obtained. In particular, differences in the results corresponding to different PVT conditions may indicate an uncontrolled leakage path.

Figures 4A and 4B show parts of an exemplary electronic circuit that may be analyzed by means of an implementation of a method according to the improved concept.

In figure 4A a first resistor R1 is connected between a ground node N1 and a second circuit node N2. The ground node N1 is connected to a ground terminal VSS. A first transistor T1 is connected with a first source terminal to the second circuit node N2 and with a first drain terminal to a third circuit node N3. A gate terminal of the first transistor T1 is connected to a first circuit block B1. Between the first source terminal and the first gate terminal, there is a first gate-source voltage Vgs1.

A second transistor T2 is connected with a second source terminal to the third circuit node N3 and with a second drain terminal to a fourth circuit node N4. A gate terminal of the second transistor T2 is connected to a second circuit block B2. Between the second source terminal and the second gate terminal, there is a second gate-source voltage Vgs2. A second resistor R2 is connected between the fourth circuit node N4 and a power node N5. The power node N5 is connected to a power terminal VDD.

In figure 4B, the first circuit block B1 is shown to comprise a third transistor T3 being connected with a third source terminal to the ground terminal VSS and with a third drain terminal to the first gate terminal of the first transistor T1. Between the third source terminal and the third gate terminal, there is a third gate-source voltage Vgs3.

In the following, an implementation of a method according to the improved concept is described with respect to figures 4A and 4B referring also to the blocks of figure 3.

For example, the ground node N1 is selected as base node corresponding to block 305. Then it is found that the ground node N1 is not connected to the power node VDD corresponding to block 310. The first resistor R1 may then be selected as a component connected to the ground node N1 according to block 320. Then, according to block 325, it is for example found that the first resistor R1 is in a conducting state.

Therefore, according to block 330, a conductive path between the ground node N1 and the second node N2 is diagnosed. Then, according to block 305, the second node N2 is selected as base node. The second node N2 is found to be not connected to the power node N5. According to block 320, the first transistor T1 may be selected as the component connected to the base node, namely the second node N2. According to block 325, it may be found that the first transistor T1 is in the non-conducting state, by comparing for example the first gate-source voltage Vgs1 with a second gate-source threshold value.

After finding that the first transistor T1 is in the non-conducting state, the third transistor T3, depicted in figure 4B, may for example be selected as the further component connected to the component, namely the first transistor T1, according to block 335. Then, it may for example be determined that the non-conducting state of the first transistor T1 is ensured by the further operating point of the further component, namely the third transistor T3, and the connection of the third transistor T3 to the first transistor T1. In the present example, the third gate-source voltage Vgs3 shown in figure 4B may for example be larger than the first gate-source threshold value, causing the third transistor T3 to be in a conducting state. Therefore, the first gate terminal of the first transistor T1 is effectively connected to the ground terminal VSS. Con-sequently, the first gate-source voltage Vgs1 may be ensured to be smaller than the second gate-source threshold value, causing the first transistor T1 to be in the non-conducting state.

According to block 345, it may then be checked whether remaining components connected to the second circuit node N2 exist. In the shown example, there is no remaining component connected to the second circuit node N2. Consequently, the method proceeds according to block 350, diagnosing no leakage path.

By means of the improved concept, a structural circuit analysis may be achieved allowing for example for a faster, more reliable and more meaningful analysis of leakage paths in the circuit.

### Reference numerals

- N1: ground node
- N5: power node
- N2, N3, N4: circuit nodes
- VSS: ground terminal
- VDD: power terminal
- T1, T2, T3: transistors
- R1, R2: resistors

## Claims

1. Method for structural analysis of a circuit description representing an electronic circuit, the method performed by means of a circuit design tool and comprising
- selecting a base node of the electronic circuit being coupled via a conductive path to a first supply node of the circuit;
- determining whether the base node is directly connected to a second supply node of the circuit;
- if the base node is directly connected to the second supply node, diagnosing a conductive path between the first supply node and the second supply node; and
- if the base node is not directly connected to the second supply node
- selecting a component of the circuit with a first terminal being connected to the base node and with a second terminal being connected to a test node of the circuit;
- comparing an operating point of the component with at least one specified conduction criterion for the first and the second terminal; and
- diagnosing a conductive path between the first supply node and the test node depending on a result of the comparison.

2. Method according claim 1, further comprising generating an analysis report containing information about a result of the comparison of the operating point with the at least one conduction criterion.

3. Method according to one of claims 1 or 2, further comprising
- depending on the result of the comparison, selecting a further component of the circuit connected to the component;
- determining a further operating point of the further component; and
- determining whether the further operating point and/or the connection of the further component to the component affects the result of the comparison; and wherein
- the diagnosis of the conductive path between the first supply node and the test node depends on a result of the determination whether the further operating point and/or the connection of the further component to the component affects the result of the comparison.

4. Method according to claim 3, wherein the selection of the further component, the determination of the further operating point and the determination whether the further operating point and/or the connection of the further component to the component affects the result of the comparison are carried out if the comparison yields that the operating point renders the component non-conducting.

5. Method according to one of claims 3 or 4, further comprising generating an analysis report containing information about
- a result of the comparison of the operating point and the at least one conduction criterion; and
- depending on the result of the comparison, whether the further operating point and/or the connection of the further component to the component affects the result of the comparison.

6. Method according to one of claims 1 to 5, wherein at least the steps of
- selecting the base node;
- determining whether the base node is directly connected to the second supply node;
- selecting the component;
- comparing the operating point of the component with the at least one specified conduction criterion; and
- diagnosing a conductive path;
are carried out repeatedly in a cyclic manner.

7. Method according to claim 6, wherein in an initial cycle the selection of the base node comprises selecting the first supply node as the base node.

8. Method according to one of claims 6 or 7, wherein in a cycle the selection of the base node comprises selecting the test node of a preceding cycle as the base node.

9. Method according to one of claims 6 to 8, wherein in a cycle the selection of the base node comprises selecting the base node of a preceding cycle as the base node.

10. Method according to one of claims 1 to 9, wherein the comparison of the operating point with the at least one conduction criterion comprises comparing a voltage between two terminals of the component with a threshold value.

11. Method according to claim 10, wherein the threshold value depends on a type of the component and/or on a positioning of the component within the circuit.

12. Method according to one of claims 1 to 11, further comprising providing at least one of the following beforehand
- a netlist based on which the base node, the test node and/or the component are selected;
- a configuration file based on which the operating point is compared with the at least one conduction criterion; and
- a simulator file from which the operating point is obtained.

13. Method according to claim 12, further comprising recognizing analog circuitry structures of the electronic circuit based on the netlist and/or the configuration file.

14. Method according to one of claims 1 to 13, wherein the circuit design tool is implemented as an Electronic Design Automation tool.

15. Computer program product comprising a code, said code being configured to implement a method according to one of claims 1 to 14.
